# EUROPEAN PATENT APPLICATION

(11) **EP 3 343 509 A1**
(43) Date of publication of application: **04.07.2018**
(21) Application number: 17161219.5
(22) Date of filing: 15.03.2017
(51) Int. Cl.: G06T 7/73, G06F 3/01, G06K 9/22

(54) **A SYSTEM AND METHOD FOR ASSISTED POSE ESTIMATION**

(30) Priority: 30.12.2016 IN 201641045076
(71) Applicant: Wipro Limited, 560 035 Karnataka (IN)
(72) Inventor: JAYARAJ, Ragupathy, 560068 Karnataka (IN); PRABHU, Mukesh Manjunath, 560102 Karnataka (IN)
(74) Representative: Finnegan Europe LLP

(57) **Abstract**

A system and method for assisted pose estimation are disclosed. The method includes obtaining by a pose estimator, one or more image frames including at least one subject. The method includes calibrating the pose estimator based on at least one of at least one assistive stencil or at least one predetermined reference point, wherein the at least one of the at least one assistive stencil or the at least one predetermined reference point is based on the at least one subject. The method further includes, determining by the pose estimator at least one initial pose of the at least one subject based on the calibration.

## Description

### Technical Field

This disclosure relates to pose estimation, and more particularly to a system and method for assisted pose estimation.

### Background

In the field of machine vision, the position and orientation of an object is known as the "pose" of the object. The task of determining the position and orientation of an object is thus known as pose estimation. Pose estimation, and tracking of objects from pose to pose, has huge significance in augmented reality systems, to be able to accurately present information with respect to actual objects. Conventional pose estimation techniques include implementation of various image recognition methodologies like object recognition, edge detection, face recognition etc., and different sensor based methodologies like IR point cloud calculation.

The commonality in the above-mentioned techniques is that the system must recognize at least part of the actual object's structure and features for the purpose of pose estimation and tracking.

Pose estimation based on recognition techniques requiring recognition of the actual object's structure and features is not reliable due to the need to estimate poses in near real time versus the actual poses that can be estimated per second.

Pose estimation based on recognition techniques requiring recognition of the actual object's structure and features is also not reliable due to the difference between the ideal conditions where the system was trained and the actual conditions where the system is used.

As the number of objects whose poses need to be estimated increases in the scene, there is a considerable performance degradation in the existing recognition methods, which further reduces the actual estimated poses per second.

### SUMMARY

In one embodiment, a method for assisted pose estimation is described. The method includes obtaining by a pose estimator, one or more image frames including at least one subject. The method includes calibrating the pose estimator based on at least one of at least one assistive stencil or at least one predetermined reference point, wherein the at least one of the at least one assistive stencil or the at least one predetermined reference point is based on the at least one subject. The method further includes, determining by the pose estimator at least one initial pose of the at least one subject based on the calibration.

In another embodiment, a pose estimator for assisted pose estimation is disclosed. The pose estimator includes at least one processor and a memory. The memory stores instructions that, when executed by the at least one processor, causes the at least one processor to perform operations including obtaining by a pose estimator, one or more image frames including at least one subject. The operations further include calibrating the pose estimator based on at least one of at least one assistive stencil or at least one predetermined reference point, wherein the at least one of the at least one assistive stencil or the at least one predetermined reference point is based on the at least one subject. Finally, the memory may include instructions to determine at least one initial pose of the at least one subject based on the calibration.

In another embodiment, a non-transitory computer-readable storage medium for assisted pose estimation is disclosed, which when executed by a computing device, cause the computing device to perform operations including obtaining by a pose estimator, one or more image frames including at least one subject. The operations further include calibrating the pose estimator based on at least one of at least one assistive stencil or at least predetermined reference point, wherein the at least one of the at least one assistive stencil or the at least one predetermined reference point is based on the at least one subject. Finally, the operations may include instructions to determine at least one initial pose of the at least one subject based on the calibration.

### BRIEF DESCRIPTION OF THE DRAWINGS

The accompanying drawings, which are incorporated in and constitute a part of this disclosure, illustrate exemplary embodiments, and together with the description, serves to explain the disclosed principles.
Figure 1 illustrates a pose estimator 100 in accordance with some embodiments of the present disclosure.
Figure 2A illustrates an exemplary assistive stencil in accordance with some embodiments of the present disclosure.
Figure 2B illustrates an exemplary assistive stencil comprising objects in accordance with some embodiments of the present disclosure.
Figure 3 illustrates an exemplary method for assisted pose estimation in accordance with some embodiments of the present disclosure.
Figure 4 illustrates an exemplary method for assisted pose estimation based on assistive stencil in accordance with some embodiments of the present disclosure.
Figure 5 illustrates an exemplary method for assisted pose estimation based on predetermined reference point in accordance with some embodiments of the present disclosure.
Figure 6 is a block diagram of an exemplary computer system for implementing embodiments consistent with the present disclosure.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Embodiments of the present disclosure provide a system and method for assisted pose estimation. The present subject matter obtains image frames corresponding to at least one subject for estimating the pose of the at least one subject by a pose estimator. Subsequently, the pose estimator may be calibrated based on at least one of at least one assistive stencil or at least one predetermined reference point. The at least one assistive stencil or the at least one predetermined reference point may be retrieved from a database, based on the at least one subject. After calibration of the pose estimator, an initial pose of the at least one subject may be determined based on the calibration values.

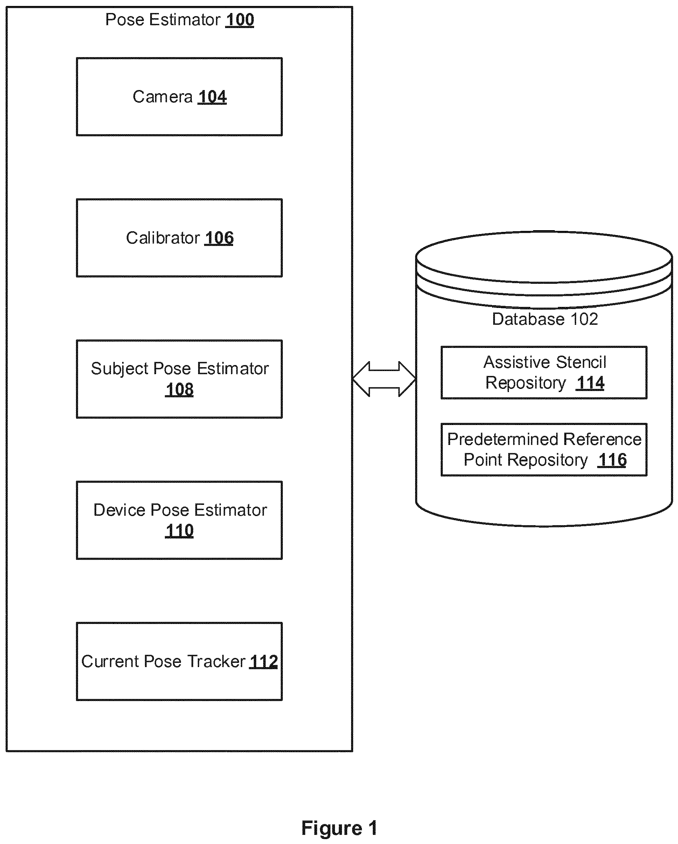

Figure 1 illustrates a pose estimator 100 in accordance with some embodiments of the present disclosure. The pose estimator is a device that is configured to determine the position and/or orientation of a subject. The pose estimator 100 may be communicatively coupled with a database 102. The pose estimator 100 comprises a camera 104, a calibrator 106, a subject pose estimator (SPE) 108, a device pose estimator (DPE) 110 and a current pose tracker (CPT) 112.

Further, the pose estimator 100 may communicate with the database 102, through a network. The network may be a wireless network, wired network or a combination thereof. The network can be implemented as one of the different types of networks, such as intranet, local area network (LAN), wide area network (WAN), the internet, and such. The network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the network may include a variety of network devices, including routers, bridges, servers, computing devices, storage devices, etc. In some embodiments, the database 102 may be a local database present within the pose estimator 100.

As shown in Figure 1, the database 102 may include an assistive stencil repository (ASR) 114 and a predetermined reference point repository (PRPR) 116. The ASR 114 may include at least one assistive stencil. The term "assistive stencil" as used herein preferably refers to graphical information that can be displayed to guide a user in positioning a subject within an image frame. The assistive stencil may include features (such as a border or outline) corresponding to the features of the subject. The user may move the pose estimator and/or the subject and/or the stencil, such that the features of the assistive stencil are aligned with the corresponding features of the subject. In this manner, the assistive stencil guides a user in positioning a subject within the image frame. The assistive stencil may be displayed on a display device associated with the pose estimator.

The assistive stencils may be associated with a particular pose of the stencil. That is, an assistive stencil may have a position and/or orientation, which is referred to as the pose of the stencil. In some embodiments, the assistive stencils provided to the user may be selected from a set of stencils saved in the ASR 114. The set of stencils may be downloaded to the pose estimator 100 during configuration of the pose estimator 100, or at a later point of time and saved locally. Here, each set of the assistive stencils may correspond to the subject. For example, if the user owns two different cars, then two sets of assistive stencils, each corresponding to one car may be selected by the user from the ASR 114. In some other embodiments, the assistive stencils may be associated with a particular pose of the subject. For example, if the user owns a car, the user may select an assistive stencil corresponding to only the left side front door of the car if the user is standing on the left side of the car.

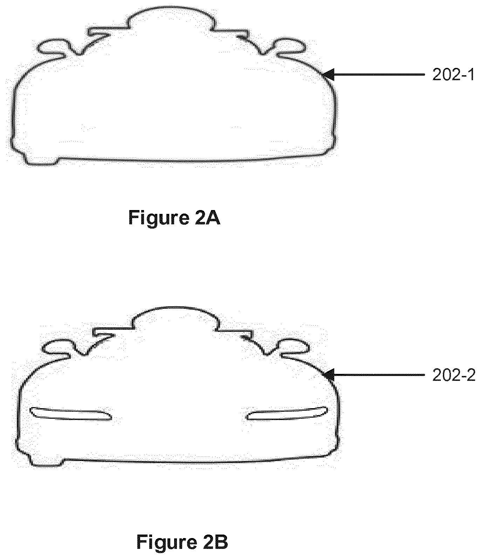

The assistive stencils selected by the user for a subject may be pre-created based on one or more photographs or images of the subject. For example, if stencils are to be created for a car, the images of the car from various online and offline sources may be used to create the assistive stencils. The assistive stencils may be images having only minimalistic details of the subject tracked as opaque and rest of the surfaces of the subject left transparent. The assistive stencils may be two dimensional stencils or three dimensional stencils. In order to create the assistive stencils for a subject, different views of the subject may be photographed and stencils created for the subject. Figure 2A and Figure 2B represent assistive stencils for the rear view of a car. In Figure 2A, an assistive stencil 202-1 represents the rear view of a car. The assistive stencil 202-1 may only outline the outer periphery of the car. In Figure 2B, an assistive stencil 202-2 represents the rear view of car, including the outer periphery of a car and outline of objects within the car.

The PRPR 116 may store predetermined reference points. In some embodiments, the predetermined reference points may be any part of the at least one subject. In an example, the predetermined reference point may be the left door handle of a car, or may be the soap box of a washing machine of a particular model. The predetermined reference point may help the pose estimator 100 in understanding in which part of the at least one subject, the pose estimator 100 is placed, if the user places the pose estimator 100 there.

The pose estimator 100 may be implemented on a variety of computing systems. Examples of the computing systems may include a laptop computer, a desktop computer, a tablet, a notebook, a workstation, a mainframe computer, a smart phone, a server, a network server, and the like. Although the description herein is with reference to certain computing systems, the systems and methods may be implemented in other computing systems, albeit with a few variations, as will be understood by a person skilled in the art.

In operations, to assist in pose estimation, the camera 104 may capture various image frames including at least one subject. In the context of this disclosure, the image frames may correspond to continuous frames of the subject that are received via the camera lens when the camera is pointed at the subject. Thus, capturing the image frames of the subject may not require taking a photograph of the subject. Usually, a photograph represents a point-in-time image of the subject that is saved either on a photographic film or is stored electronically. The image frames as described in conjunction with this disclosure may represent, in some embodiments, a continuous real-time set of frames of the subject. The image frames may not be required to be stored, or may be stored temporarily for a period of time.

The image frames including the subject may be received by the calibrator 106. The calibrator 106 may calibrate the pose estimator 100 based on the at least one assistive stencil or the at least one predetermined reference point retrieved from ASR 114 and PRPR 116. The assistive stencils or the predetermined reference point may be retrieved from the database 102 based on the subject.

In some embodiments, the calibrator 106 may receive an assistive stencil based on the user selection from the ASR 114. In an example, the calibrator 106 may receive assistive stencil for the rear view of a car, selected by the user. The pose of the assistive stencil may also be received by the calibrator 106. In the context of this disclosure, a combination of position and orientation of the subject with respect to a coordinate system may be considered to be the pose of the subject. Also for the purposes of this disclosure, calibration may be the process of configuring the pose estimator 100, to provide a result for a sample within an acceptable range. In an example, the calibration result may be used to establish a relationship between the measurement technique used by the pose estimator 100 and certain other known values. In an example, the pose estimator 100 may use different calibration techniques to correct lens distortion, measure the size of the subject in world units, or determine the location of the pose estimator in a particular real world scene. In an example, calibration techniques may also include mapping three dimensional (3D) points of the real world scene to two dimensional (2D) points in the image frames.

In some embodiments, the assistive stencil may be displayed on a display. The assistive stencil may be calibrated by the calibrator 106, based on sizing of the assistive stencil to fit the subject. In an example, sizing of the assistive stencil includes cropping, scaling, transitioning or rotating the at least one assistive stencil through one or more gesture inputs. In an example, the gesture inputs may include but not limited to swiping, pinching etc. In another example, the assistive stencil may have to be rotated and tilted to a certain degree in order for the assistive stencil to fit the subject present in the image frames. In a further example, various voice commands may also be used in order to implement the sizing to fit the at least one subject. The use may have to use various gestures to manipulate the sizing of the assistive stencil based on various gestures.

In some other embodiments, the user may have to move the pose estimator 100 in order for the assistive stencil to fit the subject present in the image frames received by the camera 104. In an example, the subject may be so big that it does not fit in an image frame. In such cases the user may move backward and in different directions, in order for the subject to fit in the image frames, and in its turn for the subject to fit the assistive stencil selected by the user.

In some embodiments, the calibrator 106 may determine an initial pose of the assistive stencil based on the sizing.

In an embodiment, the calibrator 106 may prompt the user the at least one predetermined reference point retrieved from the PRPR 114 based on the subject. In an example, the predetermined reference point may be prompted to the user based on the subject detection by the pose estimator 100. In an example, the subject may be identified by the user, and based on the identification, the calibrator 106 may prompt at least one predetermined reference point to the user. In another example, subject detection may be performed based on various well known facial detection techniques and object detection techniques.

Upon receiving the prompt from the calibrator 106, the user may position the pose estimator 100 on the predetermined reference point on the subject. In an example, the calibrator 106 may prompt the user to place the pose estimator 100 on the soap box, which may be the at least one predetermined reference point of a washing machine, which may be the subject. In an example, the user may position the pose estimator 100, on the predetermined reference point for the estimator 106 to determine the calibration of the pose estimator 100.

In some embodiments, the calibrator 106 may prompt the user to confirm the calibration. Once the user confirms the calibration, the calibrator 106 may fix the calibration values for the pose estimator.

In some embodiments, the at least one initial pose of the pose estimator may be determined based on at least one of one or more positional sensor values and one or more orientation sensor values by the device pose estimator 110. That is, the pose estimator may have a position and/or orientation, which is referred to as the pose of the pose estimator. In an example, the positional sensors may help in determining the position, and may be absolute position sensors or relative positional sensors. Position sensors may be useful for determining the physical position of the pose estimator 100, in the world's frame of reference. In an example, the positional sensors may include capacitive transducer, capacitive displacement sensor, piezo-electric transducer etc. In an example, orientation sensors may provide if the pose estimator 100 is tilted to the left or right, or up or down. Further, the orientation sensors may provide the angle of tilt of the pose estimator in x and y axis known as roll and pitch. In an example, the pose of the pose estimator may be determined based on the positional and orientation sensor values.

The calibration values may be received by the subject pose estimator 108. In an embodiment, the subject pose estimator 108 may determine the at least one initial pose of the subject, based on the calibration value. In an example, the subject pose estimator 108 may use different pose estimation techniques to estimate the at least one initial pose of the subject. In an example, if the mapping from 3D world scenes to 2D image frames are known, the geometry of the subject is known, then the projected image of the subject on the image frame maybe a function of the subject's pose. Since the different parts of the subject may be identified by the calibrator through assistive stencil based calibration and particular reference points on the subject may be identified through the predetermined reference point based calibration method, the pose transformation may be calculated from a set of equations which may relate the 3D coordinates of the points with their 2D image frame coordinates by the subject pose estimator 108. In another example, different point set registration algorithms may be used by the subject pose estimator 108 to determine the pose the subject.

In some embodiments, the at least one initial pose of the at least one subject may be determined by the subject pose estimator 108, based on at least one of the initial pose of the pose estimator, the initial pose of the at least one assistive stencil or the at least one predetermined reference point. The at least one initial position of the pose estimator may be determined by the device pose estimator 110.

Further, the current pose tracker 112 may track a current pose of the at least one subject based on the at least one initial pose of the at least one subject, a current pose of the pose estimator or the initial pose of the pose estimator. In an example, if the pose estimator 100 may be moved to some other position, then the pose of the pose estimator 100 at that point may be the current pose of the pose estimator. The new pose may also be calculated by the device pose estimator 110 based on the positional and orientation sensors values. In an example, the initial pose of the pose estimator 100 and the pose of the subject at the time of calibration is known based on the results of the subject pose estimator 108 and the device pose estimator 110. The only change may be in the pose of the pose estimator 100, which may now be termed as the current pose of the pose estimator 100. In an example, the at least one pose of the pose estimator 100 in rotational coordinate system at the time calibration may be 00, 160, 90 degrees and the current pose of the pose estimator 100 in rotational terms may be 50, 150, 45, degree. The current pose tracker 112, may calculate the difference in the rotational values to determine the current pose of the at least one subject.

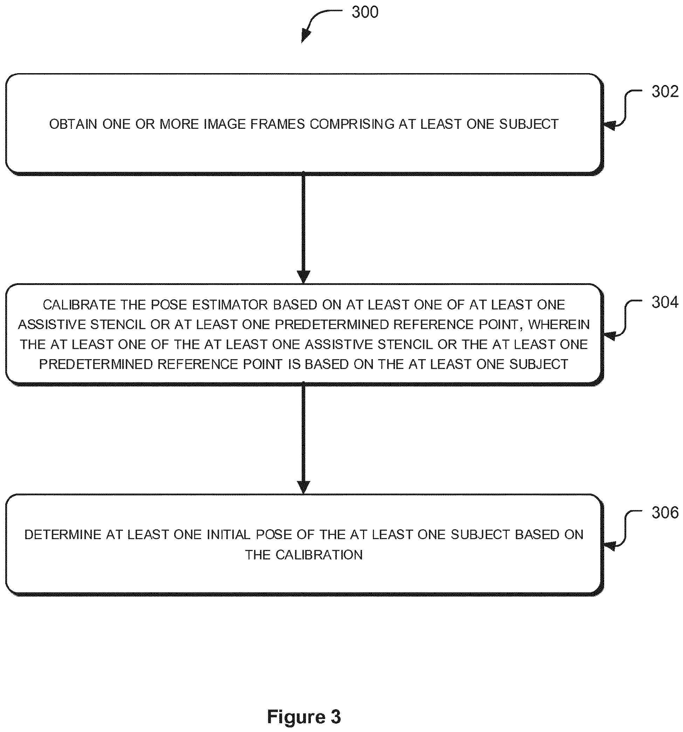

Figure 3 illustrates an exemplary method for assisted pose estimation in accordance with some embodiments of the present disclosure.

The methods 300, 400 and 500 may be described in the general context of computer executable instructions. Generally, computer executable instructions can include routines, programs, objects, components, data structures, procedures, modules, and functions, which perform particular functions or implement particular abstract data types. The methods 300, 400 and 500 may also be practiced in a distributed computing environment where functions are performed by remote processing devices that are linked through a communication network. In a distributed computing environment, computer executable instructions may be located in both local and remote computer storage media, including memory storage devices.

Reference is made to Figure 3, Figure 4 and Figure 5, the order in which the methods 300, 400 and 500 described is not intended to be construed as a limitation, and any number of the described method blocks can be combined in any order to implement the methods 300, 400 and 500 or alternative methods. Additionally, individual blocks may be deleted from the methods 300, 400 and 500 without departing from the scope of the subject matter described herein. Furthermore, the methods 300, 400 and 500 can be implemented in any suitable hardware, software, firmware, or combination thereof.

With reference to Figure 3, at step 302, one or more image frames may be comprising at least one subject may be obtained. In an embodiment, the pose estimator 100 may obtain the one or image frames. In the context of this disclosure, the image frames may correspond to continuous frames of the subject that are received via the camera lens when the camera is pointed at the subject. Thus, capturing the image frames of the subject may not require taking a photograph of the subject.

At step 304, the pose estimator 100 may be calibrated by the calibrator 106, based on at least one of at least one assistive stencil or at least one predetermined reference point, wherein the at least one of the at least one assistive stencil or the at least one predetermined reference point may be based on the at least one subject.

For the purposes of this disclosure, calibration may be the process of configuring the pose estimator 100, to provide a result for a sample within an acceptable range. In an example, the calibration result may be used to establish a relationship between the measurement technique used by the pose estimator 100 and known values. In an example, the pose estimator 100 may use different calibration techniques to correct lens distortion, measure the size of the subject in world units, or determine the location of the pose estimator in a particular real world scene. In an example, calibration techniques may also include mapping three dimensional (3D) points of the real-world scene to two dimensional (2D) points in the image frames.

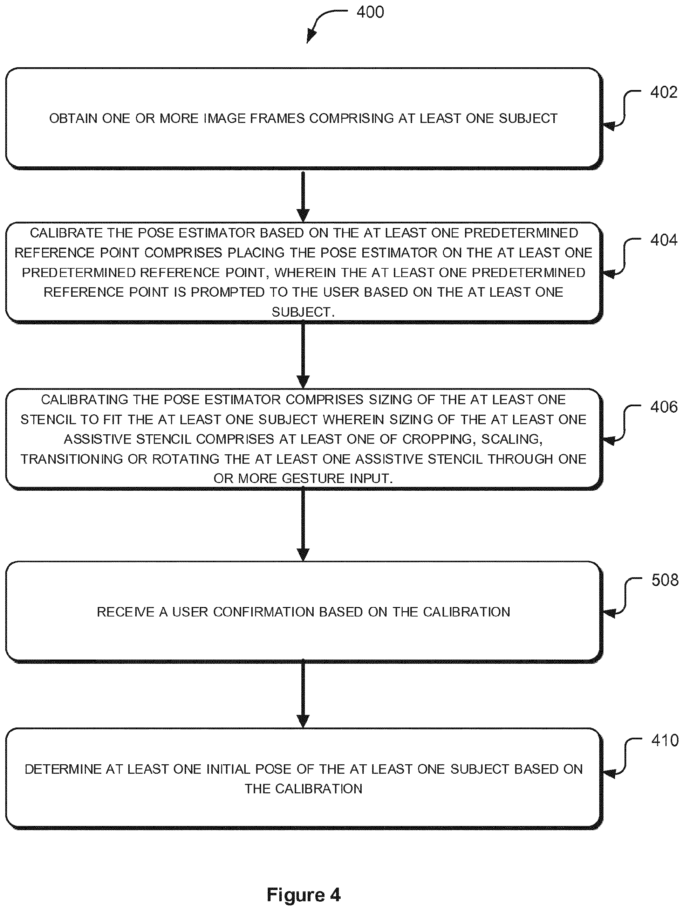

In an embodiment, the assistive stencils may be pre-created and stored in the database 102, in ASR 114. In an example, the assistive stencil may be the stencil of the rear view of a car, where the car may be the subject. Further based on sizing of the assistive stencil, the pose estimator 100 may be calibrated. Calibration based on assistive stencil may be explained further in reference to Figure 4.

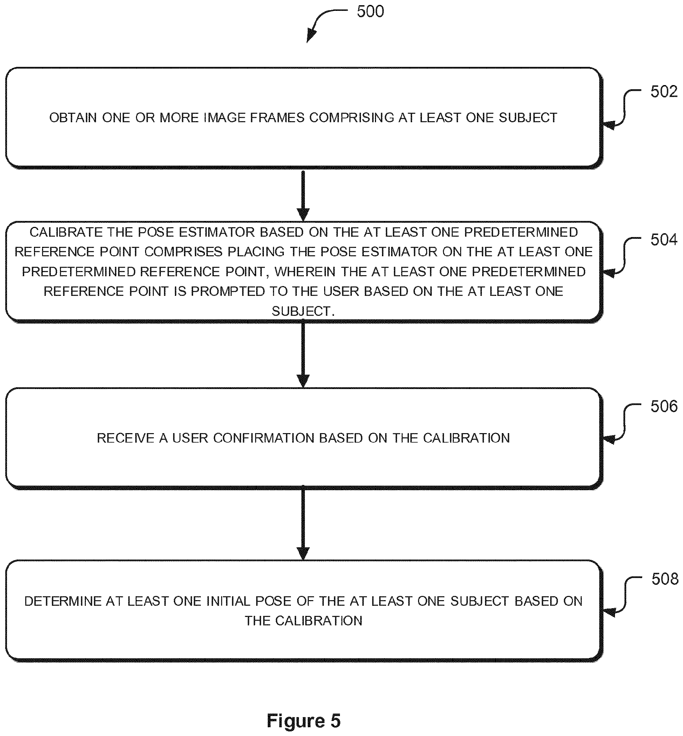

In another embodiment, the calibration of the pose estimator 100 may be performed by the calibrator 106 based on the at least one predetermined reference point retrieved from the PRPR 116. In an example, the predetermined reference point may be a reference point on a known subject. In an example, the predetermined reference point may be the left hand door handle of a car, where the car may be the subject. The at least one predetermined reference point based calibration is explained in conjunction with Figure 5.

In some other embodiments, the pose estimator 100 may be moved around a subject, in order for the calibration to be performed by the calibrator 106. In an example, the pose estimator 100 may be moved towards or away from the subject in order for the assistive stencil to fit the subject, or for placing the pose estimator 100, on the predetermined reference point for calibration by the calibrator 106.

In a few other embodiments, the calibrator 106 may prompt the user for confirmation on the calibration. On confirmation by the user on calibration, the calibrated values may be fixed for the pose estimator 100 by the calibrator 106. The initial pose of the assistive stencil may be determined by the calibrator 106.

At step 306, at least one initial pose of the at least one subject may be determined based on the calibration. In some embodiments, the at least one initial pose of the at least one subject may be determined based on at least one of the initial pose of the pose estimator, the initial pose of the at least one assistive stencil or the predetermined reference point. In the context of this disclosure, a combination of position and orientation of the subject with respect to a coordinate system may be considered to be the pose of the subject. In an example, the initial pose of the at least one pose of the at least one subject may be determined by the subject pose estimator 108.

In some embodiments, an initial pose of the pose estimator may be determined by the device pose estimator 110, based on at least one of one or more positional sensor values and one or more orientation sensor values. In an example, the positional sensors may determine physical position of the pose estimator 100, in the world's frame of reference. In an example, the positional sensors may include capacitive transducer, capacitive displacement sensor, piezo-electric transducer etc. In an example, orientation sensors may provide if the pose estimator 100 is tilted to the left or right, or up or down. Further, the orientation sensors may provide the angle of tilt of the pose estimator in x and y axis known as roll and pitch. In an example, the pose of the pose estimator may be determined based on the positional and orientation sensor values.

In some embodiments, a current pose of the at least one subject may be tracked, based on the at least one initial pose of the at least one subject, a current pose of the pose estimator or the initial pose of the pose estimator. In an example, the current pose of the subject may be the difference in rotational coordinate system values between the current pose of the pose estimator and initial pose of the pose estimator. In example, tracking the current pose of the subject may be determined by the current pose tracker 112.

Figure 4 illustrates an exemplary method for assisted pose estimation based on assistive stencil in accordance with some embodiments of the present disclosure.

Referring to Figure 4, at step 402, one or more image frames comprising at least one subject may be obtained by the pose estimator 100, using the camera 104. In some embodiments, the image frames may be obtained as described in Figure 1 and Figure 3.

At step 404, the calibrator 106, may render at least one assistive stencil on a display, wherein the at least one assistive stencil may be retrieved from the ASR 114 in the database 102 based on the at least one subject. In an example, the assistive stencil may be selected by the user from the ASR 114. The assistive stencil may be displayed on a display of the pose estimator 100. The pose of the assistive stencil selected by the user may also be retrieved from the ASR 114.

At step 406, the assistive stencil may be calibrated by sizing of the at least one stencil to fit the at least one subject wherein sizing of the at least one assistive stencil may include at least one of cropping, scaling, transitioning or rotating the at least one assistive stencil through one or more gesture inputs. In an example, the calibrator 106 may receiving the sizing input from the user based on the gestures, and determine the calibration of the pose estimator 100.

At step 408, user confirmation may be received by the calibrator 106 to finalize the calibration of the pose estimator 100.

At step 410, at least one initial pose of the at least one subject may be determined by the subject pose estimator 108, based on the calibration. The determination of the pose estimation has been described with reference to Figure 1.

Figure 5 illustrates an exemplary method for assisted pose estimation based on predetermined reference point in accordance with some embodiments of the present disclosure.

With reference to Figure 5, at step 502, one or more image frames comprising at least one subject may be obtained by the pose estimator 100, using the camera 104. In some embodiments, the image frames may be obtained as described in Figure 1 and Figure 3.

At step 504, the pose estimator 100 may be calibrated based on the at least one predetermined reference point comprises placing the pose estimator on the at least one predetermined reference point, wherein the at least one predetermined reference point is prompted to the user based on the at least one subject. In some embodiments, the pose estimator 100 may identify the subject and prompt the user with a particular reference point of the subject. In some other embodiments, the user may identify the subject and feed in the pose estimator 100, and a predetermined reference point of the subject, maybe retrieved from the PRPR 116. In an example, the calibrator 106 may retrieve the predetermined reference point from the PRPR 116 and prompt it to the user. The user may place or position the pose estimator 100 on the predetermined reference point, for the calibrator 106 to calibrate.

At step 506, user confirmation may be obtained by the calibrator 106, to fix the calibration for the pose estimator 100.

At step 508, at least one initial pose of the at least one subject may be determined by the subject pose estimator 108, based on the calibration. The determination of the pose estimation has been described with reference to Figure 1.

The advantages of the present invention may be the ability to provide accurate pose estimation with minimal to no reliance on subject recognition processes. Due to no reliance on subject recognition, the system may not be excessively loaded, and this leads to a seamless performance of providing pose estimation even when the number of subjects increase in number. Another advantage may no performance deterioration due to wear & tear, image quality, light condition, signal interferences, etc.

### Computer System

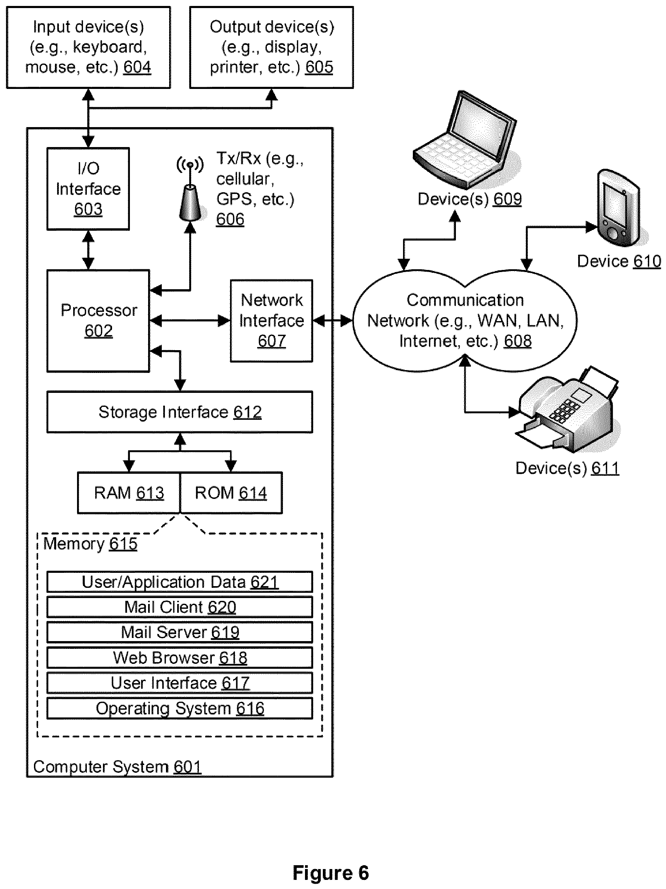

Figure 6 is a block diagram of an exemplary computer system for implementing embodiments consistent with the present disclosure. Variations of computer system 601 may be used for implementing the devices and systems disclosed herein. Computer system 601 may comprise a central processing unit ("CPU" or "processor") 602. Processor 602 may comprise at least one data processor for executing program components for executing user- or system-generated requests. A user may include a person, a person using a device such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 802 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 602 may be disposed in communication with one or more input/output (I/O) devices via I/O interface 603. The I/O interface 603 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.11 a/b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 603, the computer system 601 may communicate with one or more I/O devices. For example, the input device 604 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 605 may be a printer, fax machine, video display (e.g., cathode ray tube (CRT), liquid crystal display (LCD), light-emitting diode (LED), plasma, or the like), audio speaker, etc. In some embodiments, a transceiver 606 may be disposed in connection with the processor 602. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 602 may be disposed in communication with a communication network 608 via a network interface 607. The network interface 607 may communicate with the communication network 608. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 608 may include, without limitation, a direct interconnection, local area network (LAN), wide area network (WAN), wireless network (e.g., using Wireless Application Protocol), the Internet, etc. Using the network interface 607 and the communication network 608, the computer system 601 may communicate with devices 610, 611, and 612. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 601 may itself embody one or more of these devices.

In some embodiments, the processor 602 may be disposed in communication with one or more memory devices (e.g., RAM 613, ROM 614, etc.) via a storage interface 612. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc. Variations of memory devices may be used for implementing, for example, the databases disclosed herein.

The memory devices may store a collection of program or database components, including, without limitation, an operating system 616, user interface application 617, web browser 618, mail server 616, mail client 620, user/application data 621 (e.g., any data variables or data records discussed in this disclosure), etc. The operating system 616 may facilitate resource management and operation of the computer system 601. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 617 may facilitate display, execution, interaction, manipulation, or operation of program components through textual or graphical facilities. For example, user interfaces may provide computer interaction interface elements on a display system operatively connected to the computer system 601, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 601 may implement a web browser 618 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 601 may implement a mail server 619 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 601 may implement a mail client 620 stored program component. The mail client may be a mail viewing application, such as Apple Mail, Microsoft Entourage, Microsoft Outlook, Mozilla Thunderbird, etc.

In some embodiments, computer system 601 may store user/application data 621, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of any computer or database component may be combined, consolidated, or distributed in any working combination.

The specification has described a system and method for assisted pose estimation. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method of assisted pose estimation, wherein the method comprises:
obtaining, by a pose estimator, one or more image frames comprising at least one subject;
calibrating the pose estimator based on at least one of at least one assistive stencil or at least one predetermined reference point, wherein the at least one of the at least one assistive stencil or the at least one predetermined reference point is based on the at least one subject; and
determining, by the pose estimator, at least one initial pose of the at least one subject based on the calibration.

2. The method of claim 1, wherein calibrating the pose estimator comprises rendering the at least one assistive stencil on a display, wherein the at least one assistive stencil is retrieved from a database based on the at least one subject.

3. The method of claim 1 or claim 2, wherein calibrating the pose estimator based on the at least one predetermined reference point comprises placing the pose estimator on the at least one predetermined reference point, wherein the at least one predetermined reference point is prompted to the user based on the at least one subject, further wherein the at least one predetermined reference point is retrieved from the database.

4. The method of any of the preceding claims, wherein calibrating the pose estimator comprises displacement of the pose estimator.

5. The method of any of the preceding claims, wherein calibrating the pose estimator comprises sizing of the at least one assistive stencil to fit the at least one subject wherein sizing of the at least one assistive stencil comprises at least one of cropping, scaling, transitioning or rotating the at least one assistive stencil through one or more gesture input.

6. The method of claim 5, further comprising determining an initial pose of the at least one assistive stencil based on the sizing.

7. The method of any of the preceding claims, further comprising receiving a user confirmation based on the calibration.

8. The method of any of the preceding claims, further comprising determining an initial pose of the pose estimator based on at least one of one or more positional sensor values and one or more orientation sensor values.

9. The method of any of the preceding claims, wherein determining the at least one initial pose of the at least one subject is based on at least one of the initial pose of the pose estimator, the initial pose of the at least one assistive stencil or the at least one predetermined reference point.

10. The method of any of the preceding claims, further comprising tracking a current pose of the at least one subject based on the at least one initial pose of the at least one subject, a current pose of the pose estimator or the initial pose of the pose estimator.

11. A pose estimator for assisted pose estimation, comprising:
one or more processors;
a memory storing instructions, executable by the one or more processors, for causing the one or more processors to perform the method of any of the preceding claims.

12. A non-transitory computer-readable medium storing instructions for assisted pose estimation, wherein upon execution of the instructions by one or more processors, the processors perform the method of any of claims 1 to 10.
